# EUROPEAN PATENT APPLICATION

(11) **EP 2 634 975 A1**
(43) Date of publication of application: **04.09.2013**
(21) Application number: 11783086.9
(22) Date of filing: 02.06.2011
(51) Int. Cl.: H04L 12/56

(54) **METHOD AND DEVICE FOR SENDING MESSAGE**

(30) Priority: 25.11.2010 CN 201010559126
(71) Applicant: Huawei Technologies Co., Ltd., Shenzhen, Guangdong 518129 (CN)
(72) Inventor: LIU, Yanfei, Guangdong 518129 (CN); LIN, Qi, Guangdong 518129 (CN)
(74) Representative: Thun, Clemens
(86) International application number: PCT/CN2011/075230
(87) International publication number: WO 2011/144169

(57) **Abstract**

Embodiments of the present invention relate to a method and an apparatus for sending a packet. The method for sending a packet includes: receiving an original packet; querying a pre-configured GRE forwarding entry including next-hop address information and outbound interface information, and obtaining next-hop address information and outbound interface information of a GRE tunnel used to send the original packet; encapsulating the original packet into a GRE packet; encapsulating the GRE packet into an outer layer protocol packet; and selecting a sending path in the GRE tunnel according to the next-hop address information and outbound interface information, and sending the outer layer protocol packet through the sending path. Therefore, according to the method and apparatus for sending a packet in the embodiments of the present invention, a sending path is selected in a GRE tunnel by using next-hop address information and outbound interface information, so that a packet sending path may be independently selected, thereby reasonably configuring and efficiently using each path of a GRE tunnel, and improving packet sending efficiency.

## Description

### FIELD OF THE INVENTION

Embodiments of the present invention relate to the field of data communications, and in particular to a method and an apparatus for sending a packet.

### BACKGROUND OF THE INVENTION

The Generic Routing Encapsulation (Generic Routing Encapsulation, GRE) protocol encapsulates data packets of some network layer protocols, such as Internet Protocol (Internet Protocol, IP) and Internet Protocol version 6 (Internet Protocol version 6, IP6), so that these encapsulated data packets can be transmitted over another network layer protocol (such as IP). GRE adopts a tunnel (Tunnel) technology, and is a layer 3 tunnel protocol of a virtual private network (Virtual Private Network, VPN).

A tunnel is a virtual point-to-point connection, may be regarded as a virtual interface supporting only point-to-point connections, and provides a channel, so that an encapsulated data packet can be transmitted on this channel. In addition, a data packet is encapsulated and decapsulated separately at both ends of a tunnel. One packet needs to undergo two processes, encapsulation and decapsulation, if it intends to pass through an IP network and be transmitted in a tunnel.

In a GRE tunnel technology, a layer of GRE header is encapsulated for an inner layer packet, then a network protocol header of an outer layer protocol is added, and the packet is forwarded over the outer layer protocol.

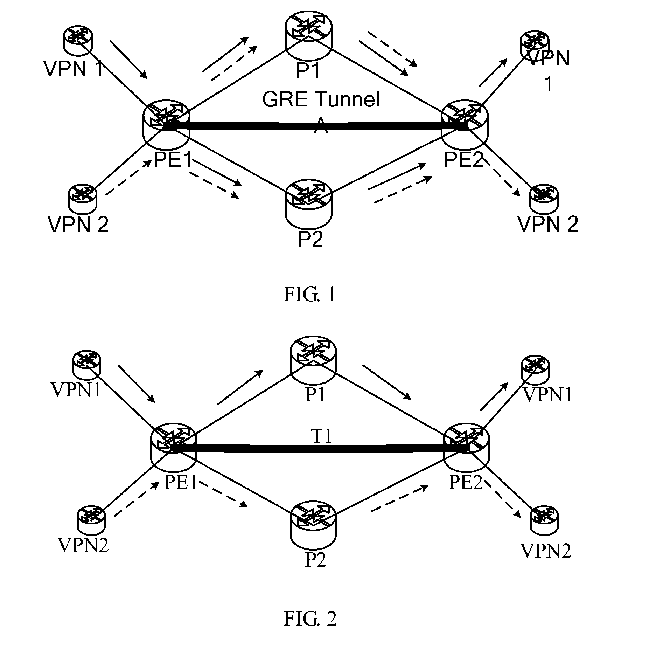

FIG. 1 is a topology view of a packet sending network in the prior art. As shown in the figure, an operating network is formed by edge routers (Provider Edge, PE) PE1 and PE2 and core routers (Provider, P) P1 and P2. A GRE tunnel is between PE1 and PE2. Solid lines and dashed lines are traffic formed by packets of VPN1 and VPN2. When VPN traffic enters GRE tunnel A on PE1, the GRE protocol on PE1 adds a GRE header to a VPN original packet, encapsulates an outer layer IP header according to a source address and a destination address that are in a forwarding entry of the tunnel, and gives an encapsulated packet to the IP protocol. The IP protocol searches a route to the destination address, finds that there are two paths (through P1 or through P2) to PE2, and then randomly sends the packet to the tunnel end PE2 through the two paths.

Therefore, in a method for sending a packet in the prior art, the GRE protocol only adds a GRE header to a VPN original packet and encapsulates an IP header, and does not control forwarding of an encapsulated packet. Instead, a path is randomly selected to send the encapsulated packet based on the outer layer protocol according to the destination address. Therefore, the existing method for sending a packet cannot control how to forward the encapsulated packet and therefore cannot make a difference in handling different VPN traffic. For example, if forwarding performance of P1 is better than that of P2, it is expected that the traffic of VPN1 with heavier traffic is forwarded through P1 and the traffic of VPN2 with lighter traffic is forwarded through P2 with poor performance. However, a packet encapsulated by the GRE protocol is forwarded according to the IP protocol at an outer layer, that is, the packet is forwarded randomly through P1 or P2. Moreover, because a forwarding path of the encapsulated packet cannot be known, a GRE tunnel cannot provide load sharing at a tunnel layer. No matter how many GRE tunnels are configured for a same destination address, the encapsulated packet is randomly sent by the IP protocol finally.

### SUMMARY OF THE INVENTION

Embodiments of the present invention provide a method and an apparatus for sending a packet, so as to implement that a packet sending path is selected in a GRE tunnel, thereby reasonably configuring each path of the GRE tunnel, and improving packet sending efficiency.

An embodiment of the present invention provides a method for sending a packet. The method for sending a packet includes:
receiving an original packet;
querying a pre-configured generic routing encapsulation GRE forwarding entry including next-hop address information and outbound interface information, and obtaining next-hop address information and outbound interface information of a GRE tunnel used to send the original packet;
encapsulating the original packet into a GRE packet;
encapsulating the GRE packet into an outer layer protocol packet; and
selecting a sending path in the GRE tunnel according to the next-hop address information and outbound interface information, and sending the outer layer protocol packet through the sending path.

An embodiment of the present invention provides an apparatus for sending a packet. The apparatus for sending a packet includes:
a receiving unit, configured to receive an original packet;
a querying unit, configured to query a pre-configured generic routing encapsulation GRE forwarding entry including next-hop address information and outbound interface information, and obtain next-hop address information and outbound interface information of a GRE tunnel used to send the original packet;
a GRE packet encapsulating unit, configured to encapsulate the original packet into a GRE packet;
an outer layer protocol packet encapsulating unit, configured to encapsulate the GRE packet into an outer layer protocol packet; and
a sending unit, configured to select a sending path in the GRE tunnel according to the next-hop address information and outbound interface information, and send the outer layer protocol packet through the sending path.

Therefore, according to the method and apparatus for sending a packet in the embodiments of the present invention, a sending path is selected in a GRE tunnel by using next-hop address information and outbound interface information, so that a packet sending path may be independently selected, each path of a GRE tunnel may be reasonably configured and efficiently used, and the packet sending efficiency may be improved.

### BRIEF DESCRIPTION OF THE DRAWINGS

FIG. 1 is a topology view of a method for sending a packet in the prior art;
FIG. 2 is a topology view of a method for sending a packet according to an embodiment of the present invention;
FIG. 3 is a flowchart of the method for sending a packet in the embodiment of the present invention according to FIG. 2;
FIG. 4 is a schematic diagram of a packet structure of the method for sending a packet according to the embodiment of the present invention;
FIG. 5 is a topology view of a method for sending a packet according to another embodiment of the present invention;
FIG. 6 is a flowchart of the method for sending a packet in the embodiment of the present invention according to FIG. 5;
FIG. 7 is a topology view of a method for sending a packet according to still another embodiment of the present invention;
FIG. 8 is a flowchart of the method for sending a packet in the embodiment of the present invention according to FIG. 7;
FIG. 9 is another topology view of a method for sending a packet according to still another embodiment of the present invention;
FIG. 10 is a schematic diagram of an apparatus for sending a packet according to an embodiment of the present invention;
FIG. 11 is a schematic diagram of an apparatus for sending a packet according to another embodiment of the present invention; and
FIG. 12 is a schematic diagram of an apparatus for sending a packet according to still another embodiment of the present invention.

### DETAILED DESCRIPTION OF THE EMBODIMENTS

The following further describes the technical solutions of the embodiments of the present invention in detail with reference to the accompanying drawings and embodiments.

A method and an apparatus for sending a packet according to the embodiments of the present invention may have a capability of selecting a generic routing encapsulation (GRE) tunnel, may select a GRE tunnel through a configuration when necessary, and in a case that multiple paths exist on a GRE tunnel, select a specific sending path by using next-hop address information and outbound interface information.

FIG. 2 is a topology view of a method for sending a packet according to an embodiment of the present invention. As shown in FIG. 2, a carrier network includes a GRE tunnel T1, two network devices at both ends of the tunnel, and core routers P1 and P2. Preferably, the two network devices at both ends of the tunnel are edge routers PE1 and PE2. Virtual private networks VPN1 and VPN2 send packets through the tunnel T1 of the carrier network.

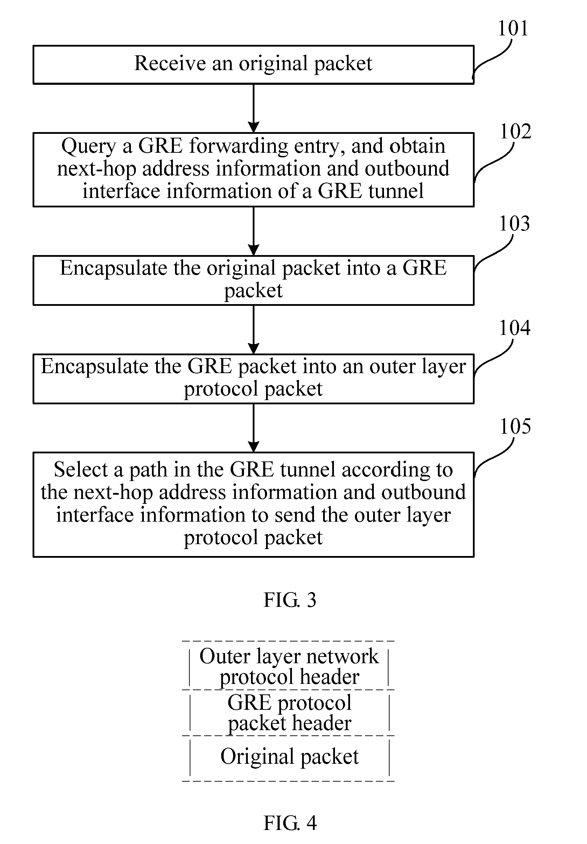

FIG. 3 is a flowchart of the method for sending a packet in the embodiment of the present invention according to FIG. 2. As shown in FIG. 3, the method for sending a packet according to the embodiment of the present invention specifically includes the following steps:
Step 101: Receive an original packet.

That is, a network device at one end of the tunnel, for example, PE1, receives an original packet which is sent by a VPN, for example, VPN1 or VPN2, and needs to be sent through the tunnel T1.

Step 102: Query a pre-configured GRE forwarding entry including next-hop address information and outbound interface information, and obtain next-hop address information and outbound interface information of a generic routing encapsulation GRE tunnel used to send the original packet.

Configured next-hop address information and outbound interface information are obtained through querying by the network device at one end of the tunnel by searching the pre-configured GRE forwarding entry, and the GRE forwarding entry includes the next-hop address information and outbound interface information.

The network device at one end of the tunnel queries a VPN forwarding table or routing table according to the original packet, and obtains a GRE forwarding entry corresponding to the VPN forwarding table or routing table. The GRE forwarding entry is pre-configured with next-hop address information and outbound interface information. Therefore, next-hop address information and outbound interface information used to forward the original packet may be obtained by querying the GRE forwarding entry. Preferably, the VPN forwarding table or routing table includes a tunnel interface index, a forwarding entry index, or another identifier, where the tunnel interface index, the forwarding entry index, or the another identifier points to the GRE forwarding entry. The network device at one end of the tunnel may determine the GRE forwarding entry according to the tunnel interface index, the forwarding entry index, or the another identifier. For example, hashing may be performed on the tunnel interface index, the forwarding entry index, or the another identifier to obtain an address of the GRE forwarding entry; alternatively, a GRE forwarding table may be queried according to the tunnel interface index, the forwarding entry index, or the another identifier, and a GRE forwarding entry that includes the tunnel interface index, the forwarding entry index, or the another identifier and is in the GRE forwarding table is determined as the GRE forwarding entry used to send the original packet.

The next-hop address information and outbound interface information are used to determine a path for sending a packet in the GRE tunnel T1 that sends the packet. Therefore, the path may be configured randomly.

Step 103: Encapsulate the original packet into a GRE packet.

This is an essential process of GRE protocol encapsulation of the original packet. After the GRE protocol encapsulation, there is a GRE protocol packet header in a GRE protocol packet, and reference may be made to a schematic diagram of a packet structure of the embodiment of the method for sending a packet according to the embodiment of the present invention shown in FIG. 4.

Step 104: Encapsulate the GRE packet into an outer layer protocol packet.

The first encapsulation is the GRE protocol encapsulation, and the second encapsulation is outer layer protocol encapsulation. In this embodiment, IP protocol encapsulation is taken as an example. After IP encapsulation, the GRE packet header is further encapsulated with an IP packet header to obtain an IP packet.

Step 105: Select a path in the GRE tunnel according to the next-hop address information and outbound interface information to send the outer layer protocol packet.

The path which is in the T1 and is for sending the IP packet may be known by using the next-hop address information and outbound interface information, and the IP packet is sent through the sending path. Therefore, a function of selecting a sending path in a GRE tunnel is implemented.

As shown in FIG. 2, although the carrier network that the VPN1 and the VPN2 span has only one GRE tunnel T1, there may be two packet sending paths on the tunnel T1, that is, sending is performed through the core router P1 or sending is performed through the core router P2. The method for sending a packet according to the embodiment of the present invention is to determine a path through which a packet is sent.

Assume that a forwarding capability of the P1 is better than a forwarding path of the P2, while packet traffic of the VPN1 is heavier than that of the VPN2. Then, a relatively preferred method is to use the P1 path to send a packet of the VPN1 and use the P2 path to send a packet of the VPN2. In the prior art, because a path cannot be selected, it can only be that the IP protocol at an outer layer randomly selects the P1 path or the P2 path to send packets of the VPN1 and the VPN2, and the path cannot be selected independently.

In the method for sending a packet according to the embodiment of the present invention, a PE1 may encapsulate next-hop address information and outbound interface information in an outer layer IP protocol packet header to independently select a packet sending path. In this manner, next-hop address information and outbound interface information of a P1 may be encapsulated in a packet of a VPN1. Therefore, it is implemented that a packet of the VPN1 with heavy packet traffic is sent through the P1 with good forwarding performance, while a packet of a VPN2 with relatively light packet traffic is sent through a P2 with relatively poor forwarding performance. In this manner, it is implemented that a packet sending path is independently selected, each path of a GRE tunnel may be reasonably configured and efficiently used, and packet sending efficiency is also improved.

Likewise, if reliability of the P1 is better than that of the P2, and the VPN2 has a higher reliability requirement than the VPN1, according to a same method, it may also be implemented that a P1 path with high reliability is used to send a packet of the VPN2 that requires high packet sending reliability, and a P2 path with relatively low reliability is used to send a packet of the VPN1 that requires relatively low packet sending reliability.

The foregoing embodiment is for a case that there is no tunnel sending path security mechanism. Because an existing GRE tunnel cannot provide a tunnel protection capability, a tunnel with high reliability cannot be provided for packet traffic once a selected path fails in sending.

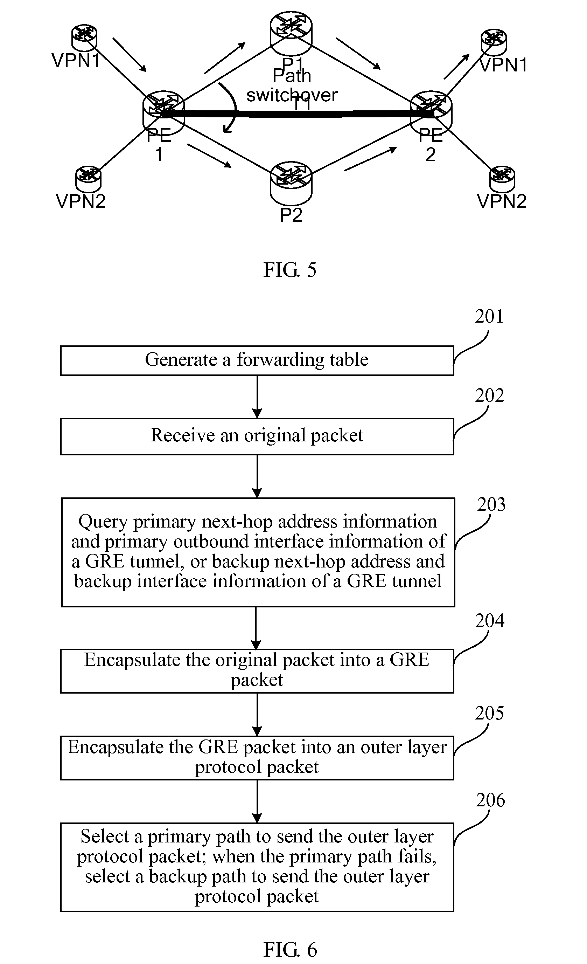

FIG. 5 is a topology view of a method for sending a packet according to another embodiment of the present invention. As shown in FIG. 5, a carrier network includes a GRE tunnel T1, two network devices at both ends of the tunnel, and core routers P1 and P2. Preferably, the two network devices at both ends of the tunnel are edge routers PE1 and PE2. A VPN1 and a VPN2 send packets through the tunnel T1 of the carrier network. The tunnel T1 has two paths, that is, a path through the P1 and a path through the P2.

FIG. 6 is a flowchart of the method for sending a packet in the embodiment of the present invention according to FIG. 5. As shown in FIG. 6, the method for sending a packet according to the another embodiment of the present invention specifically includes the following steps:
Step 201: Configure primary next-hop address information and primary outbound interface information on a network device at one end of a tunnel. Preferably, further configure backup next-hop address and backup interface information and generate a GRE forwarding entry.

A primary path corresponding to the primary next-hop address and primary outbound interface information is a primary sending path, and the backup next-hop address and backup interface information correspond to a backup sending path. Therefore, a GRE forwarding entry is generated. In addition, the configuration process is completed on a network device at one end of a tunnel, for example, PE1.

Step 202: Receive an original packet.

That is, a network device at one end of the tunnel, for example, PE1, receives an original packet which is sent by a VPN, for example, VPN1 or VPN2, and needs to be sent through the tunnel T1.

Step 203: Query, according to the GRE forwarding entry, primary next-hop address information and primary outbound interface information of a GRE tunnel used to send the original packet, and/or query, according to a forwarding table, backup next-hop address and backup interface information of a GRE tunnel used to send the original packet.

Configured primary next-hop address information and primary outbound interface information are obtained through querying by searching the GRE forwarding entry. The primary next-hop address information and primary outbound interface information are used to determine a primary sending path of the GRE tunnel T1 for sending the packet. The primary sending path may be configured randomly. The configured backup next-hop address information and backup outbound interface information are also obtained through querying by searching the GRE forwarding entry. The backup next-hop address information and backup interface information are used to determine a backup sending path of the GRE tunnel T1 for sending the packet. The backup sending path may also be configured randomly. Preferably, the backup path may be used to send the packet when the primary path is unavailable.

Step 204: Encapsulate the original packet into a GRE packet.

This is an essential process of GRE protocol encapsulation of the original packet. After the GRE protocol encapsulation, there is a GRE protocol packet header in a GRE protocol packet.

Step 205: Encapsulate the GRE packet into an outer layer protocol packet.

The first encapsulation is the GRE protocol encapsulation, and the second encapsulation is outer layer protocol encapsulation. In this embodiment, IP protocol encapsulation is taken as an example. After IP encapsulation, the GRE packet header is further encapsulated with an IP packet header to obtain an IP packet.

Step 206: Select the primary path in the GRE tunnel according to the primary next-hop address information and primary outbound interface information to send the outer layer protocol packet; preferably, select the backup path in the GRE tunnel according to the backup next-hop address information and backup outbound interface information to send the outer layer protocol packet when the primary path fails.

Step 203 is a path selection step, while step 206 is a specific packet sending step. From the perspective of specific implementation, it may be slightly different from the perspective of timing sequence. For example, there are the following two manners:
A first manner is: In step 203, the GRE forwarding entry is first queried according to the original packet and the primary next-hop address information and primary outbound interface information are obtained, and then whether the primary path corresponding to the primary next-hop address information and primary outbound interface information is available is determined. If the primary path is available, the primary path is used as the sending path in step 206 and the outer layer protocol packet is sent through the primary path. However, if the primary path is unavailable, the backup next-hop address information and backup outbound interface information are obtained, the backup path corresponding to the backup next-hop address information and backup outbound interface information is used as the sending path, and the outer layer protocol packet is sent through the backup path. In this manner, the primary path and the backup path may not be queried simultaneously.
A second manner is: In step 203, the GRE forwarding entry is queried according to the original packet, the primary next-hop address information and primary outbound interface information are obtained, the backup next-hop address information and backup outbound interface information are also obtained. When the packet is sent in step 206, if the primary path corresponding to the primary next-hop address information and primary outbound interface information is available, the primary path is used as the sending path and the outer layer protocol packet is sent through the primary path; if the primary path is unavailable, the backup path corresponding to the backup next-hop address information and backup outbound interface information is used as the sending path and the outer layer protocol packet is sent through the backup path. In this manner, the primary path and the backup path are queried simultaneously during path querying.

The primary path which is in the T1 and is for sending the IP packet may be known by using the primary next-hop address information and primary outbound interface information, and the IP packet is sent through the primary sending path. Therefore, a function of selecting a sending path in a GRE tunnel is implemented. Moreover, during a process of data routing or forwarding, it often cannot be ensured that the primary path is always secure and valid. Preferably, this embodiment provides a security mechanism and a protection function to ensure reliability of the tunnel T1. When the primary path fails, the backup path is available for sending a packet, and the packet may be sent through the backup path according to the backup next-hop address information and backup outbound interface information. In this manner, when the primary path is invalid, the packet is sent through the backup path, thereby ensuring security of packet sending and providing a reliable and secure assurance.

As shown in FIG. 5, although the carrier network that the VPN1 and the VPN2 span has only one GRE tunnel T1, there may be two packet sending paths on the tunnel T1, that is, sending is performed through the core router P1 or sending is performed through the core router P2.

Same as the previous embodiment, assume that a forwarding capability of the P1 is better than a forwarding path of the P2, while packet traffic of the VPN1 is heavier than that of the VPN2. Then, a relatively preferred method is to use the P1 path to send a packet of the VPN1 and use the P2 path to send a packet of the VPN2, so as to implement that a packet sending path is independent selected, so that each path of a GRE tunnel is reasonably configured and efficiently used, and packet sending efficiency is also improved.

The method for selecting a primary packet sending path is the same as that of the previous embodiment, which is not repeatedly described here.

Take the VPN1 as an example. A path through the P1 is a primary path for the VPN1 to send a packet. However, the P1 is not completely reliable and has a possibility to become invalid. Once the P1 becomes invalid, a packet of the VPN1 cannot be normally sent through the P1 path. This embodiment provides a security mechanism. Because a backup path of the tunnel T1 exists, which is assumed to be the P2 path, after the primary path becomes invalid, the VPN1 may send the packet through the backup path P2. In this manner, the packet of the VPN1 is sent by using the backup path P2 in a case that the primary path is invalid because a problem occurs on the P1, thereby implementing the security mechanism.

Likewise, a path through the P2 is a primary path for the VPN2 to send a packet. The P2 is also not completely reliable and has a possibility to become invalid. Once the P2 becomes invalid, a packet of the VPN2 cannot be normally sent through the P2 path. By using the security mechanism in this embodiment, because a backup path of the tunnel T1 exists, which is assumed to be the P1 path, after the primary path becomes invalid, the VPN2 may send the packet through the backup path P1. In this manner, the packet of the VPN2 is sent by using the backup path P1 in a case that the primary path is invalid because a problem occurs on the P1, thereby implementing the security mechanism.

The foregoing two embodiments are for a case that a carrier network has only one tunnel. Because there is only one tunnel T1, a VPN1 and a VPN2 can only send packets through a tunnel T1, and a problem of selecting a tunnel does not exist. If a carrier network has multiple tunnels, a sending tunnel may be selected, packets may be sent only through one tunnel, and the packets may also be sent through multiple tunnels.

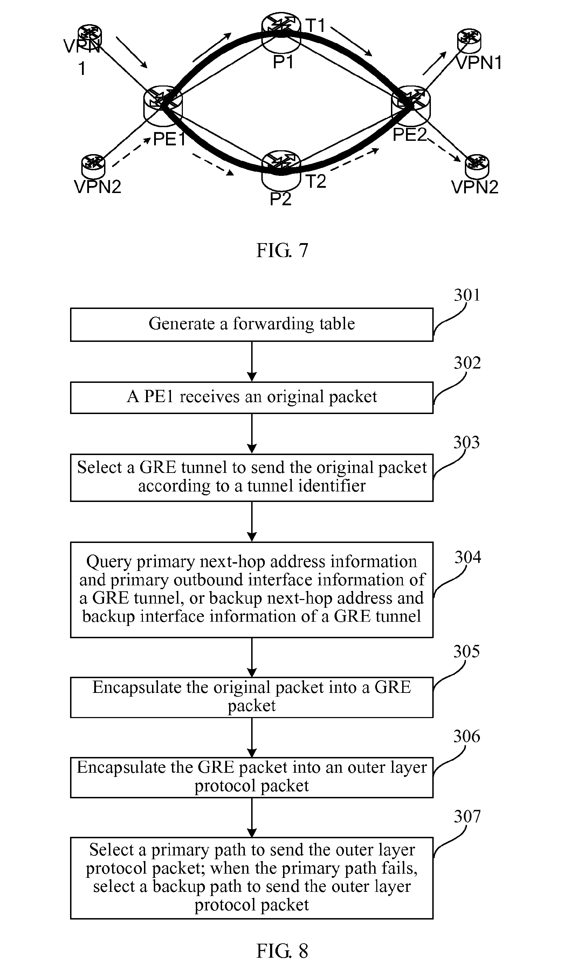

FIG. 7 is a topology view of a method for sending a packet according to still another embodiment of the present invention. As shown in the figure, a carrier network includes edge routers PE1 and PE2, core routers P1 and P2, and two GRE tunnels, that is, a tunnel T1 through the P1 and a tunnel T2 through the P2. A VPN1 and a VPN2 send packets through the two tunnels T1 and T2 of the carrier network.

FIG. 8 is a flowchart of the method for sending a packet in the embodiment of the present invention according to FIG. 7. As shown in FIG. 8, the method for sending a packet according to the still another embodiment of the present invention specifically includes the following steps:
Step 301: Configure a GRE tunnel identifier (Key), primary next-hop address information, and primary outbound interface information in a GRE forwarding entry of the PE1. Preferably, further configure backup next-hop address and backup interface information in the GRE forwarding table. In this embodiment, devices at both ends of the tunnels are the PE1 and the PE2. Optionally, the devices at both ends of the tunnels may also be other network devices.

A basic configuration method of an ordinary GRE tunnel includes: configuring one GRE tunnel interface on each of the devices at both ends of the tunnel; configuring a source address on the tunnel interface, where the source address indicates a start point of the tunnel; and configuring a destination address on the tunnel interface, where the destination address indicates an end point of the tunnel. The GRE tunnel is bidirectional. Therefore, source addresses and destination addresses of the tunnel interfaces on the devices at both ends of the tunnel, for example, the PE1 and the PE2 in this embodiment, are opposite. On the devices, an ordinary forwarding entry of the GRE tunnel is generated to subsequently guide packet encapsulation and further forwarding.

In this embodiment, a tunnel identifier, primary next-hop address information, and primary outbound interface information also need to be configured in the ordinary forwarding entry of the GRE tunnel. Preferably, backup next-hop address information and backup outbound interface information also need to be configured.

There are two configuration methods, where one is direct configuration, and the other is configuration through a path template.

First, the method for configuring the GRE forwarding entry in a direct configuration manner is specifically as follows: Configure a tunnel outbound interface, namely, a logical interface for entering a tunnel, a source IP address, and a destination IP address in a GRE forwarding entry of an endpoint of the tunnel (for example, PE1). A specific configuration example is as follows:
[Route] interface tunnel 1
[Route-Tunnel-1] source 1.1.1.1
[Route-Tunnel-1] destination 2.2.2.2

Further, configure a tunnel identifier in the GRE forwarding entry to uniquely identify each local tunnel. A specific configuration example is as follows:
[Route-Tunnel-1] gre key 12345

Preferably, configure a next-hop address (NextHop) and an outbound interface (OutInterface) in the GRE forwarding entry to specify a first hop of a primary path of the GRE tunnel. A specific configuration example is as follows:
[Route-Tunnel-1] grenexthop 100.100.10.1 outinterface Ethernet1/0/1

Preferably, configure a backup next-hop address (NextHop) and outbound interface (OutInterface) in the GRE forwarding entry to specify a first hop of a backup path that takes effect after the primary path of the GRE tunnel fails. A specific configuration example is as follows:
[Route-Tunnel-1] gre backup nexthop 200.200.10.1 outinterface Ethernet1/0/2

In this manner, the key and the next-hop and outbound interface information are added in the GRE forwarding entry of the tunnel. When an original packet enters a tunnel, a GRE packet header is first encapsulated. Then, an outer layer IP header is encapsulated according to the next-hop and outbound interface in the forwarding table, and the packet is given to the IP protocol for sending. Finally, the IP protocol sends the packet through a specified outbound interface. One GRE tunnel includes one fixed primary path, and forwarding of a bearer packet is implemented through the fixed path according to the configuration. Preferably, one tunnel may further include one backup path, which is used to provide high tunnel reliability. To add the backup path, backup next-hop and outbound interface information need to be added in the GRE forwarding entry. When the primary path becomes invalid, the packet is switched over to the backup path determined by the backup next-hop and outbound interface information for forwarding.

Second, configuration through a path template.

The primary next-hop address information and primary outbound interface information may be configured by using a path template to achieve a purpose of specifying a path. First, configure a path template and specify a primary path and a backup path in the path template. A specific configuration example is as follows:
[Route] nexthop-template abc
[Route] nexthop-template abc
[Route-nexthop-template-abc] nexthop 100.100.10.1 outinterface Ethernet1/0/1
[Route-nexthop-template-abc] nexthop 100.100.10.1 outinterface Ethernet1/0/1

Preferably, further implement configuration of the backup next-hop address information and backup outbound interface information through the path template. A specific configuration example is as follows:
[Route-nexthop-template-abc] backup nexthop 200.200.10.1 outinterface Ethernet1/0/2 [Route-nexthop-template-abc] backup nexthop 200.200.10.1 outinterface Ethernet1/0/2

Apply the path template on a tunnel interface after the path template configuration is completed, for example, implement the following configuration:
[Route-Tunnel-1] gre apply nexthop-template abc
[Route-Tunnel-1] gre apply nexthop-template abc

Therefore, it may be implemented that a path of the GRE tunnel is specified.

After a packet is sent from the PE1 to the PE2, an IP forwarding module of the PE2 finds that an inner layer is a GRE header and then sends the packet to a GRE protocol processing module for processing. The GRE protocol processing module searches, according to the source address and destination address in the IP header, locally to determine whether there is a corresponding forwarding entry. If no, the GRE protocol processing module discards the packet; if yes, the GRE protocol processing module deletes the IP header and the GRE header and sends the inner layer packet to an inner layer protocol module for further forwarding.

Step 302: The PE1 receives an original packet.

That is, the PE1 receives an original packet which is sent by the VPN1 or the VPN2, and needs to be sent through the tunnel T1.

Step 303: Query the GRE tunnel identifier in the GRE forwarding entry, and select a GRE tunnel to send the original packet according to the GRE tunnel identifier.

The PE1 queries a VPN forwarding table or routing table on the PE1 according to the destination address of the original packet, determines a tunnel interface index corresponding to the original packet, and obtains the GRE forwarding entry through querying according to the index. Because the GRE tunnel identifier has been configured in the GRE forwarding entry, the PE1 may determine a GRE tunnel used to send the original packet.

Step 304: Query, according to the GRE forwarding entry, primary next-hop address information and primary outbound interface information of the GRE tunnel used to send the original packet, or query, according to the GRE forwarding entry, backup next-hop address and backup interface information of the GRE tunnel used to send the original packet.

The primary next-hop address information and primary outbound interface information of a GRE tunnel (which may be the T1 or the T2) are used to determine a primary path which is in the T1 or the T2 and is for sending the IP packet. The primary path may be configured randomly. However, the IP packet header may further include the backup next-hop address information and backup outbound interface information of the tunnel (the T1 or the T2) that sends the packet. The backup next-hop address information and backup outbound interface information are used to determine a backup path which is in the T1 or the T2 and is for sending the IP packet. The backup path may be configured randomly.

Step 305: Encapsulate the original packet into a GRE packet.

This is an essential process of GRE protocol encapsulation of the original packet. After the GRE protocol encapsulation, there is a GRE protocol packet header in a GRE protocol packet, and a tunnel identifier is encapsulated in the GRE protocol packet header. Because there are multiple tunnels, for example, there are two tunnels T1 and T2 in this embodiment, a receiving end may determine, according to tunnel identifier information, a tunnel through which a packet is sent.

Step 306: Encapsulate the GRE packet into an outer layer protocol packet.

The first encapsulation is the GRE protocol encapsulation, and the second encapsulation is outer layer protocol encapsulation. In this embodiment, IP protocol encapsulation is taken as an example. After IP encapsulation, the GRE packet header is further encapsulated with an IP packet header to obtain an IP packet.

Step 307: Select the primary path in the GRE tunnel according to the primary next-hop address information and primary outbound interface information to send the outer layer protocol packet; preferably, select the backup path in the GRE tunnel according to the backup next-hop address information and backup outbound interface information to send the outer layer protocol packet when the primary path fails.

After a tunnel and a path of the tunnel are selected, the primary path which is in the T1 or the T2 and is for sending the IP packet may be known by using the primary next-hop address information and primary outbound interface information, and the IP packet is sent through the primary sending path. Therefore, a function of selecting a sending path in a GRE tunnel is implemented. However, it often cannot be ensured that the primary path is always secure and valid. Preferably, this embodiment provides a security mechanism and a protection function to ensure reliability of the tunnel T1 or T2. When the primary path fails, the backup path is available for sending a packet, and the packet may be sent through the backup path according to the backup next-hop address information and backup outbound interface information. In this manner, when the primary path is invalid, the packet is sent through the backup path, thereby ensuring security of packet sending and providing a reliable and secure assurance.

As shown in FIG. 7, the carrier network that the VPN1 and the VPN2 span has two GRE tunnels T1 and T2, that is, the T1 through the core router P1 and the T2 through the core router P2.

In this embodiment, a packet of the VPN1 is sent through the tunnel T1, while a packet of the VPN2 is sent through the T2. A tunnel identifier of an IP packet of the VPN1 is set to an identifier of the T1, and a tunnel identifier of an IP packet of the VPN2 is set to an identifier of the T2. A receiving end PE2 may identify, according to the tunnel identifier, a tunnel through which a packet is sent.

Likewise, if a packet of the VPN1 is sent through the tunnel T2, it may also be implemented that a packet of the VPN2 is sent through the tunnel T1.

Another possibility is that it is assumed that some packets of the VPN1 are sent through the tunnel T1 and some other packets are sent through the tunnel T2, which may also be implemented.

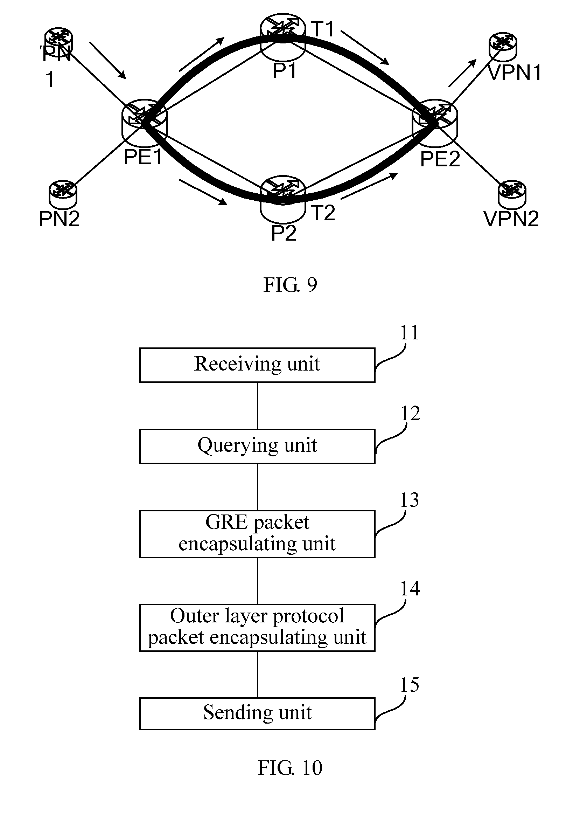

FIG. 9 is another topology view of a method for sending a packet according to still another embodiment of the present invention. As shown in the figure, a topology structure is the same as a structure of the previous topology view. However, for sending of a packet of the VPN1, the packet may be sent through the T1, where in this case, a tunnel identifier of the IP packet is set to the identifier of the T1, and the packet may also be sent through the T2, where in this case, the tunnel identifier of the IP packet is set to the identifier of the T2.

In this embodiment, a method specific for selecting a primary sending path and a backup sending path in the tunnels T1 and T2 is the same as those of the foregoing two embodiments, which is not repeatedly described here.

FIG. 10 is a schematic diagram of an apparatus for sending a packet according to an embodiment of the present invention. As shown in the figure, the apparatus for sending a packet according to the embodiment of the present invention specifically includes a receiving unit 11, a querying unit 12, a GRE packet encapsulating unit 13, an outer layer protocol packet encapsulating unit 14, and a sending unit 15.

The receiving unit 11 is configured to receive an original packet; the querying unit 12 is configured to query a pre-configured generic routing encapsulation GRE forwarding entry including next-hop address information and outbound interface information, and obtain next-hop address information and outbound interface information of a GRE tunnel used to send the original packet; the GRE packet encapsulating unit 13 is configured to encapsulate the original packet into a GRE packet; the outer layer protocol packet encapsulating unit 14 is configured to encapsulate the GRE packet into an outer layer protocol packet, where if the outer layer protocol is the IP protocol, the GRE packet is encapsulated into an IP packet; and the sending unit 15 is configured to select a sending path in the GRE tunnel according to the next-hop address information and outbound interface information, and send the outer layer protocol packet through the sending path.

As shown in FIG. 7, a carrier network that a VPN1 and a VPN2 span has two GRE tunnels T1 and T2, that is, the T1 through a core router P1 and the T2 through a core router P2.

In this embodiment, a packet of the VPN1 is sent through the tunnel T1, and a packet of the VPN2 is sent through the T2. A tunnel identifier of an IP packet of the VPN1 is set to an identifier of the T1, and a tunnel identifier of an IP packet of the VPN2 is set to an identifier of the T2. A receiving end PE2 may identify, according to the tunnel identifier, a tunnel through which a packet is sent.

Likewise, if a packet of the VPN1 is sent through the tunnel T2, it may also be implemented that a packet of the VPN2 is sent through the tunnel T1.

Another possibility is that it is assumed that some packets of the VPN1 are sent through the tunnel T1 and some other packets are sent through the tunnel T2, which may also be implemented.

FIG. 9 is another topology view of a method for sending a packet according to still another embodiment of the present invention. As shown in the figure, a topology structure is the same as a structure of the previous topology view. However, for sending of a packet of the VPN1, the packet may be sent through the T1, where in this case, a tunnel identifier of the IP packet is set to the identifier of the T1, and the packet may also be sent through the T2, where in this case, the tunnel identifier of the IP packet is set to the identifier of the T2.

The querying unit 12 is specifically configured to query the GRE forwarding entry according to the original packet, and obtain primary next-hop address information and primary outbound interface information. The sending unit 15 is specifically configured to select, according to the primary next-hop address information and primary outbound interface information, a corresponding primary path in the GRE tunnel as the sending path, and send the outer layer protocol packet through the sending path.

Configured next-hop address information and outbound interface information are obtained through querying by a network device at one end of the tunnel by searching the pre-configured GRE forwarding entry, and the GRE forwarding entry includes the next-hop address information and outbound interface information. The network device at one end of the tunnel queries a VPN forwarding table or routing table according to the original packet, and obtains a GRE forwarding entry corresponding to the VPN forwarding table or routing table. The GRE forwarding entry is pre-configured with next-hop address information and outbound interface information. Therefore, next-hop address information and outbound interface information used to forward the original packet may be obtained by querying the GRE forwarding entry. Preferably, the VPN forwarding table or routing table includes a tunnel interface index, a forwarding entry index, or another identifier, where the tunnel interface index, the forwarding entry index, or the another identifier points to the GRE forwarding entry. The network device at one end of the tunnel may determine the GRE forwarding entry according to the tunnel interface index, the forwarding entry index, or the another identifier. For example, hashing may be performed on the tunnel interface index, the forwarding entry index, or the another identifier to obtain an address of the GRE forwarding entry; alternatively, a GRE forwarding table may be queried according to the tunnel interface index, the forwarding entry index, or the another identifier, and a GRE forwarding entry that includes the tunnel interface index, the forwarding entry index, or the another identifier and is in the GRE forwarding table is determined as the GRE forwarding entry used to send the original packet.

As shown in FIG. 2, a carrier network includes a GRE tunnel T1, two network devices at both ends of the tunnel, and core routers P1 and P2. Preferably, the two network devices at both ends of the tunnel are edge routers PE1 and PE2. Virtual private networks VPN1 and VPN2 send packets through the tunnel T1 of the carrier network.

The configured next-hop address information and outbound interface information are obtained by searching the forwarding entry. The next-hop address information and outbound interface information are used to determine a path which is in the T1 and is for sending the IP packet. The path may be configured randomly. The path which is in the T1 and is for sending the IP packet may be known by using the next-hop address information and outbound interface information, and the IP packet is sent through the sending path. Therefore, a function of selecting a sending path in a GRE tunnel is implemented.

Although the carrier network that the VPN1 and the VPN2 span has only one GRE tunnel T1, there may be two packet sending paths on the tunnel T1, that is, sending is performed through the core router P1 or sending is performed through the core router P2. The apparatus for sending a packet according to the embodiment of the present invention is to determine a path through which a packet is sent.

Assume that a forwarding capability of the P1 is better than a forwarding path of the P2, while packet traffic of the VPN1 is heavier than that of the VPN2. Then, a relatively preferred method is to use the P1 path to send a packet of the VPN1 and use the P2 path to send a packet of the VPN2. In the prior art, because a path cannot be selected, it can only be that the IP protocol at an outer layer randomly selects the P1 path or the P2 path to send packets of the VPN1 and the VPN2, and the path cannot be selected independently.

In the apparatus for sending a packet according to the embodiment of the present invention, a PE1 may encapsulate next-hop address information and outbound interface information in an outer layer IP protocol packet header to independently select a packet sending path. In this manner, next-hop address information and outbound interface information of a P1 may be encapsulated in a packet of a VPN1. Therefore, it is implemented that a packet of the VPN1 with heavy packet traffic is sent through the P1 with good forwarding performance, while a packet of a VPN2 with relatively light packet traffic is sent through a P2 with relatively poor forwarding performance. In this manner, it is implemented that a packet sending path is independently selected, each path of a GRE tunnel may be reasonably configured and efficiently used, and packet sending efficiency is also improved.

Likewise, if reliability of the P1 is better than that of the P2, and the VPN2 has a higher reliability requirement than the VPN1, according to a same method, it may also be implemented that a P1 path with high reliability is used to send a packet of the VPN2 that requires high packet sending reliability, and a P2 path with relatively low reliability is used to send a packet of the VPN1 that requires relatively low packet sending reliability.

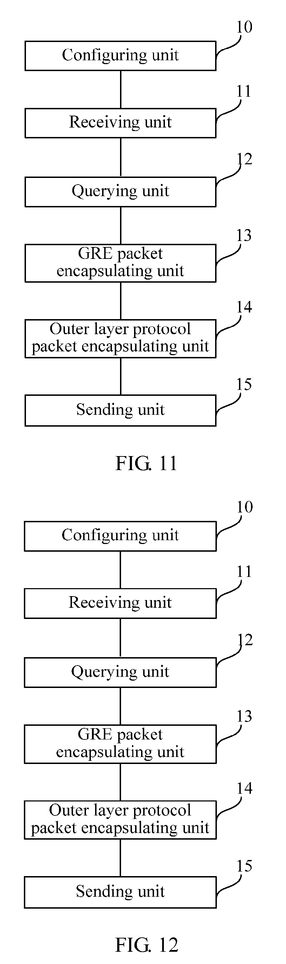

FIG. 11 is a schematic diagram of an apparatus for sending a packet according to another embodiment of the present invention. As shown in the figure, the apparatus for sending a packet according to the embodiment of the present invention specifically includes a configuring unit 10, a receiving unit 11, a querying unit 12, a GRE packet encapsulating unit 13, an outer layer protocol packet encapsulating unit 14, and a sending unit 15.

The foregoing embodiment is for a case that there is no tunnel sending path security mechanism. Because an existing GRE tunnel cannot provide a tunnel protection capability, a tunnel with high reliability cannot be provided for packet traffic once a selected primary path fails in sending.

A difference between this embodiment and the previous embodiment lies in that, this embodiment has the configuring unit 10, which is configured to configure primary next-hop address information, primary outbound interface information, and backup next-hop address and backup interface information.

The querying unit 12 is specifically configured to query a GRE forwarding entry according to an original packet, and obtain the primary next-hop address information and primary outbound interface information. The sending unit 15 is specifically configured to determine whether a primary path corresponding to the primary next-hop address information and primary outbound interface information is available. If the primary path is available, the sending unit 15 uses the primary path as a sending path, and sends an outer layer protocol packet through the primary path; if the primary path is unavailable, the querying unit 12 obtains the backup next-hop address information and backup outbound interface information, and the sending unit 15 uses a backup path corresponding to the backup next-hop address information and backup outbound interface information as a sending path, and sends an outer layer protocol packet through the backup path.

Alternatively, the querying unit 12 is specifically configured to query a GRE forwarding entry according to an original packet, and obtain the primary next-hop address information, primary outbound interface information, backup next-hop address information, and backup outbound interface information. The sending unit 15 is specifically configured to, if a primary path corresponding to the primary next-hop address information and primary outbound interface information is available, use the primary path as a sending path, and send an outer layer protocol packet through the primary path; if the primary path is unavailable, use a backup path corresponding to the backup next-hop address information and backup outbound interface information as a sending path, and send an outer layer protocol packet through the backup path.

As shown in FIG. 5, a carrier network includes one GRE tunnel T1, two network devices at both ends of the tunnel, and core routers P1 and P2. Preferably, the two network devices at both ends of the tunnel are edge routers PE1 and PE2. A VPN1 and a VPN2 send packets through the tunnel T1 of the carrier network. The tunnel T1 has two paths, that is, a path through the P 1 and a path through the P2. The primary path corresponding to the primary next-hop address and primary outbound interface information is a primary sending path, and the backup next-hop address and backup interface information correspond to a backup sending path. Therefore, a GRE forwarding entry is generated. In addition, the configuration process is completed on a network device at one end of the tunnel, for example, PE1.

Configured primary next-hop address information and primary outbound interface information are obtained through querying by searching the GRE forwarding entry. The primary next-hop address information and primary outbound interface information are used to determine a primary sending path of the GRE tunnel T1 for sending the packet. The primary sending path may be configured randomly. The configured backup next-hop address information and backup outbound interface information are also obtained through querying by searching the GRE forwarding entry. The backup next-hop address information and backup interface information are used to determine a backup sending path of the GRE tunnel T1 for sending the packet. The backup sending path may also be configured randomly. Preferably, the backup path may be used to send the packet when the primary path is unavailable.

The primary path which is in T1 and is for sending an IP packet may be known by using the primary next-hop address information and primary outbound interface information, and the IP packet is sent through the primary sending path. Therefore, a function of selecting a sending path in a GRE tunnel is implemented. Moreover, during a process of data routing or forwarding, it often cannot be ensured that the primary path is always secure and valid. Preferably, this embodiment provides a security mechanism and a protection function to ensure reliability of the tunnel T1. When the primary path fails, the backup path is available for sending a packet, and the packet may be sent through the backup path according to the backup next-hop address information and backup outbound interface information. In this manner, when the primary path is invalid, the packet is sent through the backup path, thereby ensuring security of packet sending and providing a reliable and secure assurance.

FIG. 12 is a schematic diagram of an apparatus for sending a packet according to still another embodiment of the present invention. As shown in the figure, the apparatus for sending a packet according to the embodiment of the present invention specifically includes a configuring unit 10, a receiving unit 11, a querying unit 12, a GRE packet encapsulating unit 13, an outer layer protocol packet encapsulating unit 14, and a sending unit 15.

Compared with the previous embodiment, in this embodiment, the configuring unit 10 is further configured to configure a GRE tunnel identifier in a GRE forwarding entry; and the querying unit 12 is further configured to query the GRE tunnel identifier, and select, according to the GRE tunnel identifier, a GRE tunnel to send an original packet. When encapsulating the original packet into a GRE packet, the GRE packet encapsulating unit 13 encapsulates the GRE tunnel identifier in a GRE packet header. The configuring unit 12 configures the GRE tunnel identifier in a direct configuration manner, and configures primary next-hop address information, primary outbound interface information, and backup next-hop address and backup interface information in a direct configuration manner or through a path template.

If a carrier network has only one tunnel, a VPN1 and a VPN2 can send packets only through a tunnel T1, and a problem of selecting a tunnel does not exist. If a carrier network has multiple tunnels, a problem of first selecting a tunnel occurs, and packets may be sent only through one tunnel, and the packets may also be sent through multiple tunnels. A GRE protocol packet header includes an identifier of the GRE tunnel for sending the packet, because there are multiple tunnels, for example, two tunnels T1 and T2 as shown in FIG. 7; a tunnel through which a packet is sent may be determined according to identifier information of the tunnel.

As shown in FIG. 7, a carrier network includes edge routers PE1 and PE2, core routers P1 and P2, and two GRE tunnels, that is, a tunnel T1 through the P1 and a tunnel T2 through the P2. A VPN1 and a VPN2 send packets through the two tunnels T1 and T2 of the carrier network. A packet of the VPN1 is sent through the tunnel T1, while a packet of the VPN2 is sent through the T2. A tunnel identifier of an IP packet of the VPN1 is set to an identifier of the T1, and a tunnel identifier of an IP packet of the VPN2 is set to an identifier of the T2. A receiving end PE2 may identify, according to the tunnel identifier, a tunnel through which a packet is sent. Likewise, if a packet of the VPN1 is sent through the tunnel T2, it may also be implemented that a packet of the VPN2 is sent through the tunnel T1. Another possibility is that it is assumed that some packets of the VPN1 I are sent through the tunnel T1 and some other packets are sent through the tunnel T2, which may also be implemented. As shown in FIG. 9, for sending of a packet of the VPN1, the packet may be sent through the T1, where in this case, a tunnel identifier of the IP packet is set to the identifier of the T1, and the packet may also be sent through the T2, where in this case, the tunnel identifier of the IP packet is set to the identifier of the T2.

The primary next-hop address information and primary outbound interface information of a GRE tunnel (which may be the T1 or the T2) are used to determine a primary path which is in the T1 or the T2 and is for sending the IP packet. The primary path may be configured randomly. However, the IP packet header may further include the backup next-hop address information and backup outbound interface information of the tunnel (the T1 or the T2) that sends the packet. The backup next-hop address information and backup outbound interface information are used to determine a backup path which is in the T1 or the T2 and is for sending the IP packet. The backup path may be configured randomly.

After a tunnel and a path of the tunnel are selected, the primary path which is in the T1 or the T2 and is for sending the IP packet may be known by using the primary next-hop address information and primary outbound interface information, and the IP packet is sent through the primary sending path. Therefore, a function of selecting a sending path in a GRE tunnel is implemented. However, it often cannot be ensured that the primary path is always secure and valid. Preferably, this embodiment provides a security mechanism and a protection function to ensure reliability of the tunnel T1 or T2. When the primary path fails, the backup path is available for sending a packet, and the packet may be sent through the backup path according to the backup next-hop address information and backup outbound interface information. In this manner, when the primary path is invalid, the packet is sent through the backup path, thereby ensuring security of packet sending and providing a reliable and secure assurance.

Finally, it should be noted that, the preceding embodiments are merely intended for describing the technical solutions of the embodiments of the present invention rather than limiting the present invention. Although the embodiments of the present invention are described in detail with reference to the exemplary embodiments, persons of ordinary skill in the art should understand that they may still make modifications or equivalent replacements to the technical solutions of the embodiments of the present invention, without departing from the spirit and scope of the technical solutions of the embodiments of the present invention.

## Claims

1. A method for sending a packet, comprising:
receiving an original packet;
querying a pre-configured generic routing encapsulation GRE forwarding entry comprising next-hop address information and outbound interface information, and obtaining next-hop address information and outbound interface information of a GRE tunnel used to send the original packet;
encapsulating the original packet into a GRE packet;
encapsulating the GRE packet into an outer layer protocol packet; and
selecting a sending path in the GRE tunnel according to the next-hop address information and outbound interface information, and sending the outer layer protocol packet through the sending path.

2. The method for sending a packet according to claim 1, wherein:
the obtaining next-hop address information and outbound interface information of a GRE tunnel used to send the original packet specifically comprises: querying the GRE forwarding entry according to the original packet, and obtaining the primary next-hop address information and primary outbound interface information; and
the selecting a sending path in the GRE tunnel according to the next-hop address information and outbound interface information, and sending the outer layer protocol packet through the sending path specifically comprises:
selecting, according to the primary next-hop address information and primary outbound interface information, a corresponding primary path in the GRE tunnel as the sending path, and sending the outer layer protocol packet through the sending path.

3. The method for sending a packet according to claim 1, wherein the method further comprises: configuring backup next-hop address information and backup outbound interface information in the GRE forwarding entry.

4. The method for sending a packet according to claim 3, wherein:
the querying next-hop address information and outbound interface information of a GRE tunnel used to send the original packet specifically comprises: querying the GRE forwarding entry according to the original packet, and obtaining the primary next-hop address information and primary outbound interface information; and
the selecting a sending path in the GRE tunnel according to the next-hop address information and outbound interface information, and sending the outer layer protocol packet through the sending path specifically comprises:
determining whether the primary path corresponding to the primary next-hop address information and primary outbound interface information is available; and
if the primary path is available, using the primary path as a sending path, and sending the outer layer protocol packet through the primary path;
if the primary path is unavailable, obtaining the backup next-hop address information and backup outbound interface information, using a backup path corresponding to the backup next-hop address information and backup outbound interface information as a sending path, and sending the outer layer protocol packet through the backup path.

5. The method for sending a packet according to claim 3, wherein:
the querying next-hop address information and outbound interface information of a GRE tunnel used to send the original packet specifically comprises: querying the GRE forwarding entry according to the original packet, and obtaining the primary next-hop address information, primary outbound interface information, backup next-hop address information, and backup outbound interface information; and
if the primary path corresponding to the primary next-hop address information and primary outbound interface information is available, using the primary path as a sending path, and sending the outer layer protocol packet through the primary path;
if the primary path is unavailable, using a backup path corresponding to the backup next-hop address information and backup outbound interface information as a sending path, and sending the outer layer protocol packet through the backup path;

6. The method for sending a packet according to any one of claims 2 to 5, wherein the method further comprises: configuring a GRE tunnel identifier in the GRE forwarding entry.

7. The method for sending a packet according to claim 6, wherein before the querying next-hop address information and outbound interface information of a GRE tunnel used to send the original packet, the method further comprises:
querying the GRE tunnel identifier, and selecting, according to the GRE tunnel identifier, the GRE tunnel to send the original packet.

8. The method for sending a packet according to claim 6, wherein the GRE tunnel identifier is encapsulated in the GRE packet header when the original packet is encapsulated into the GRE packet.

9. The method for sending a packet according to claim 6, wherein the GRE tunnel identifier is configured in a direct configuration manner, and the primary next-hop address information, primary outbound interface information, and backup next-hop address and backup interface information are configured in a direct configuration manner or through a path template.

10. An apparatus for sending a packet, comprising:
a receiving unit, configured to receive an original packet;
a querying unit, configured to query a pre-configured generic routing encapsulation GRE forwarding entry comprising next-hop address information and outbound interface information, and obtain next-hop address information and outbound interface information of a GRE tunnel used to send the original packet;
a GRE packet encapsulating unit, configured to encapsulate the original packet into a GRE packet;
an outer layer protocol packet encapsulating unit, configured to encapsulate the GRE packet into an outer layer protocol packet; and
a sending unit, configured to select a sending path in the GRE tunnel according to the next-hop address information and outbound interface information, and send the outer layer protocol packet through the sending path.

11. The apparatus for sending a packet according to claim 10, wherein:
the querying unit is specifically configured to query the GRE forwarding entry according to the original packet, and obtain the primary next-hop address information and primary outbound interface information; and
the sending unit is specifically configured to select, according to the primary next-hop address information and primary outbound interface information, a corresponding primary path in the GRE tunnel as the sending path, and send the outer layer protocol packet through the sending path.

12. The apparatus for sending a packet according to claim 10, wherein the apparatus further comprises a configuring unit, configured to configure primary next-hop address information, primary outbound interface information, backup next-hop address information, and backup outbound interface information in the GRE forwarding entry.

13. The apparatus for sending a packet according to claim 12, wherein:
the querying unit is specifically configured to query the GRE forwarding entry according to the original packet, and obtain the primary next-hop address information and primary outbound interface information; and
the sending unit is specifically configured to determine whether a primary path corresponding to the primary next-hop address information and primary outbound interface information is available; if the primary path is available, the sending unit uses the primary path as the sending path, and sends the outer layer protocol packet through the primary path; and if the primary path is unavailable, the querying unit obtains the backup next-hop address information and backup outbound interface information, and the sending unit uses a backup path corresponding to the backup next-hop address information and backup outbound interface information as the sending path, and sends the outer layer protocol packet through the backup path.

14. The apparatus for sending a packet according to claim 12, wherein:
the querying unit is specifically configured to query the GRE forwarding entry according to the original packet, and obtain the primary next-hop address information, primary outbound interface information, backup next-hop address information, and backup outbound interface information; and
the sending unit is specifically configured to, if the primary path corresponding to the primary next-hop address information and primary outbound interface information is available, use the primary path as the sending path, and send the outer layer protocol packet through the primary path; if the primary path is unavailable, use the backup path corresponding to the backup next-hop address information and backup outbound interface information as the sending path, and send the outer layer protocol packet through the backup path.

15. The apparatus for sending a packet according to any one of claims 12 to 14, wherein the configuring unit is further configured to configure a GRE tunnel identifier in the GRE forwarding entry.

16. The apparatus for sending a packet according to claim 15, wherein the querying unit is further configured to query the GRE tunnel identifier, and select, according to the GRE tunnel identifier, a GRE tunnel to send the original packet.

17. The apparatus for sending a packet according to claim 15, wherein the GRE packet encapsulating unit encapsulates the GRE tunnel identifier in the GRE packet header when encapsulating the original packet into the GRE packet.

18. The apparatus for sending a packet according to claim 15, wherein the configuring unit configures the GRE tunnel identifier in a direct configuration manner, and configures the primary next-hop address information, primary outbound interface information, and backup next-hop address and backup interface information in a direct configuration manner or through a path template.
